# EUROPEAN PATENT APPLICATION

(11) **EP 1 416 368 A2**
(43) Date of publication of application: **06.05.2004**
(21) Application number: 03254854.7
(22) Date of filing: 04.08.2003
(51) Int. Cl.: G06F 3/033

(54) **Window switching apparatus**

(30) Priority: 31.10.2002 JP 2002318753
(71) Applicant: FUJITSU LIMITED, Kawasaki-shi, Kanagawa 211-8588 (JP)
(72) Inventor: Maruyama, Akira, Maebashi-shi Gunma 371-0855 (JP); Yagi, Tutomu, Maebashi-shi Gunma 371-0855 (JP); Shizuka, Etsuyuki, Maebashi-shi Gunma 371-0855 (JP); Imaizumi, Minoru, Maebashi-shi Gunma 371-0855 (JP); Hayashi, Junji, Maebashi-shi Gunma 371-0855 (JP); Saito, Hiromi, Maebashi-shi Gunma 371-0855 (JP)
(74) Representative: Stebbing, Timothy Charles

(57) **Abstract**

A window switching apparatus comprises a title list display processing unit (41) displaying titles of application programs run at present as a list on a screen of a display unit (3), and an activation processing unit (42) making a window of an application program corresponding to a desired title active when the title is designated through an input unit (2). The title list display processing unit (41) comprises a select-and-display processing unit (41A) selecting a predetermined number of titles and displaying them in respective title display columns of a predetermined size constituting the title list when the number of application programs run at present is larger than a predetermined number, and a change-and-display processing unit (41B) changing titles displayed as the title list and displaying them when a title display change command is inputted through the input unit (2). The user can find out a desired window and make it active, easily and quickly, even when a plurality of windows are displayed in multiple on the screen.

## Description

The present invention relates to an application window (display) switching apparatus, a window switching program and a computer readable record medium containing the window switching program, suitable for searching for a desired window (application display) on a computer screen (for example, a desktop personal computer, a notebook-sized personal computer, or the like) or on a portable terminal (for example, a cellular phone or a PDA: Personal Digital Assistant) equipped with an operating system (OS) having a multiwindow function being able to simultaneously display a plurality of windows on a display unit, like WINDOWS (registered trademark) or Mac OS (registered trademark), for example.

Heretofore, a list of windows currently existing on a screen is displayed on a taskbar displayed in the lower part of the screen, for example, in an OS like WINDOWS.

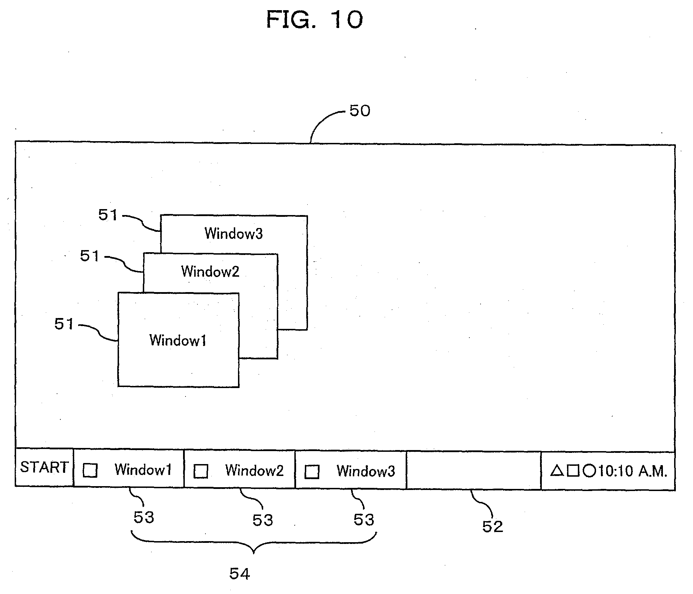

When one or more application programs are run and a plurality (three, here) of windows 51 are displayed on a screen 50 as shown in FIG. 10, for example, buttons (taskbar buttons, icons) 53 with titles (for example, application program names, file names or the like) of application programs run at present are displayed on a taskbar 52 displayed in the lower part of the screen 50, for example, whereby a list (title list) 54 of the application programs run at present are displayed on the taskbar 52 (refer to Japanese Patent Application Laid-Open Publication No. 8-255066).

The user clicks a taskbar button (tab, label) 53 displayed on the taskbar 52, thereby making a window of a desired application program active.

Even when a number of windows 51 are displayed at the same time on the screen 50, the user can easily find a window he or she desires to view by virtue of the title list 54 of application programs run at present displayed on the taskbar 52. By simply clicking a taskbar button 53 displayed on the taskbar 52, the user can immediately make a desired window (desired application) active.

However, a region for displaying the title list 54 of application programs on the taskbar 52 is limited, in an OS such as WINDOWS, for example. When windows 51 displayed in the display unit are increased in number so that the number of the taskbar buttons 53 displayed on the taskbar 52 is increased, the size of the taskbar buttons 53 is reduced, whereby all the taskbar buttons 53 corresponding to windows currently on the screen can be displayed on the taskbar 52, as shown in FIG. 11, for example (refer to Japanese Patent Application Laid-Open Publication No. 8-255066).

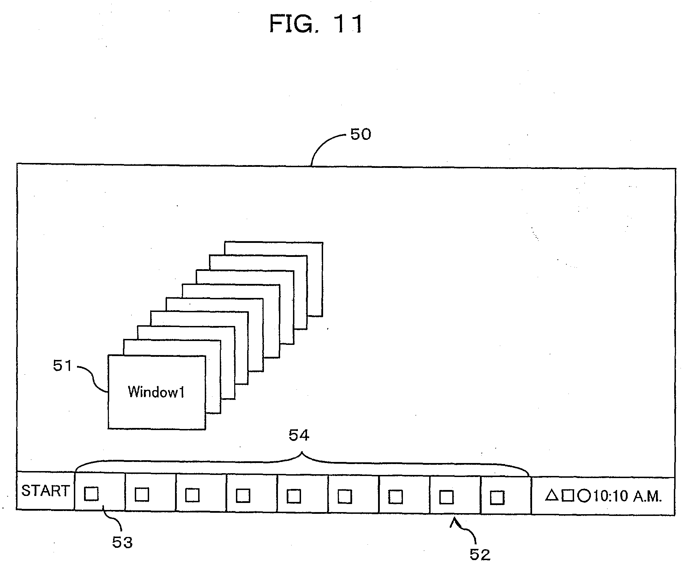

In the case where the size of each taskbar button 53 is reduced so as to display all taskbar buttons 53 corresponding to application programs as above, when the number of the windows 51 to be displayed on the screen 50 amounts to ten or more, the size of each taskbar button 53 to be displayed on the taskbar 52 becomes extremely small as shown in FIG. 11, for example. As a result, titles of the windows (files or programs) shown on the taskbar button 53 cannot be seen. Under such circumstances, the title list 54 of application programs cannot fulfill its original function, which enables the user to easily find out a window of a desired file or program and immediately make it active.

Particularly, thin, light-weight personal computers have become popular in recent years, and their displays are also reduced in size. As a result, it becomes more difficult for the user to see characters and icons, so that the title list 54 of application programs displayed on the taskbar 52 cannot fulfill its original function.

On the other hand, an OS such as WINDOWS displays the title list 54 of application programs on the taskbar 52, so that a position on the screen 50, at which the title list 54 is displayed, is limited to where the taskbar 52 is displayed. For this, the user has to move a mouse cursor (a mouse pointer, a pointer) to a region where the taskbar 52 is displayed each time the user makes a window of a desired application active. This is undesirable for realization of a quick switching of the window.

As a result, operability of the computer or terminal is reduced with a corresponding effect on user productivity.

It is therefore desirable to provide a window switching apparatus, a window switching program and a computer readable record medium containing the window switching program, which enable a user to find out a window of a desired application program, easily and quickly, even when a number of application programs are run and a plurality of windows are displayed in multiple on the display unit.

The present invention provides a window switching apparatus comprising an input unit, a display unit, a title list display processing unit for displaying titles of windows currently set on the display unit (e.g. windows of application programs run at present) as a title list on the display unit, an activation processing unit for making a window of an application program corresponding to a title emphatically displayed among (e.g. highlighted, selected or otherwise distinguished from) the titles included in the title list active, the title list display processing unit comprising a select-and-display processing unit for selecting titles of a predetermined number of application programs and displaying the selected titles in title display areas (for example, columns) of a predetermined size, those columns constituting the title list when the number of application programs run at present is larger than the predetermined number, and a change-and-display processing unit for changing the titles displayed as the title list and displaying the newly selected titles when a title display change command is inputted through the input unit.

Preferably, the change-and-display processing unit scrolls through titles displayed as the title list and thus changes the titles displayed.

Also preferably, the activation processing unit makes a window of an application program the title of which is highlighted or selected among titles included in the title list active after a predetermined time has elapsed.

Also preferably, the input unit comprises a mouse or trackball, and the title list display processing unit displays the title list in the neighborhood of a cursor moving in association with movement of the mouse or trackball.

Also preferably, the title list display processing unit displays a (three dimensional) drum-like title list having a size according to the number of application programs run at present as the title list on the display unit.

The present invention further provides a window switching program which, when executed by a computer, causes the computer to execute a process comprising: a title list displaying process of displaying titles of application programs run at present on the computer as a title list on a display unit, an activating process of making a window of an application program corresponding to a title emphatically displayed (distinguished) among titles included in the title list active, the title list displaying process comprising a selecting-and-displaying process step of selecting titles of a predetermined number of application programs and displaying the selected titles in title display areas (e.g. columns) of a predetermined size constituting the title list when the number of application programs run at present is larger than the predetermined number, and a changing-and-displaying process step of changing the titles displayed as the title list and displaying the newly selected titles when a title display change command is inputted through an input unit.

The present invention still further provides a computer readable record medium containing a window switching program for making a computer execute a process comprising a title list displaying process of displaying titles of application programs run at present as a title list on a display unit, and an activating process of making a window of an application program corresponding to a title emphatically displayed among titles included in the title list active, the title list displaying process comprising a selecting-and-displaying process step of selecting titles of a predetermined number of application programs and displaying the selected titles in title display columns of a predetermined size constituting the title list when the number of application programs run at present is larger than the predetermined number, and a changing-and-displaying process step of changing the titles displayed as the title list and displaying the newly selected titles when a title display change command is inputted through an input unit.

Preferably, at the changing-and-displaying process step, the window switching program makes the computer execute a process of scrolling through the titles displayed as the title list and thus changing the titles displayed.

Also preferably, in the activation process, the window switching program makes the computer execute a process of making a window of an application program corresponding to a title emphatically displayed (e.g. highlighted or emboldened) among titles included in the title list active after a predetermined time has elapsed.

Also preferably, the input unit comprises a mouse or trackball, and in the title list displaying process, the window switching program makes the computer execute a process of displaying the title list in the neighborhood of a cursor moving in association with movement of the mouse or trackball.

Also preferably, in the title list displaying process, the window switching program makes the computer execute a process of displaying a drum-like title list having a size according to the number of application programs run at present as the title list on a display unit.

The window switching apparatus, the window switching program and the computer readable record medium containing the window switching program according to this invention make it possible to secure a predetermined size of a title display column constituting a title list, limit the number of titles to be displayed as the title list, and change titles displayed as the title list even when a number of application programs are run and a plurality (for example, several tens) of windows are displayed in multiple on the display unit (for example, even when many windows are displayed behind a window which is full-screen-displayed), thereby displaying a title to a degree that the user can easily recognize it. The present invention can provide an advantage that the user can find out a desired window (an application program) and make it active, easily and quickly.

By enabling the application programs running on a computer to be easily identified and selected, and thus made active or closed down, the apparatus, program and record medium of the present invention help to reduce processing time and the waste of hardware resources due to the running of unnecessary programs.

Reference is made to the accompanying drawings, in which:
FIG. 1 is a schematic diagram for illustrating a whole structure of a window switching apparatus according to an embodiment of this invention;
FIG. 2 is a schematic diagram showing an example of a title list displayed by the window switching apparatus according to the embodiment of this invention, where the number of applications run at present is not more than a predetermined number;
FIG. 3 is a schematic diagram showing an example of the title list displayed by the window switching apparatus according to the embodiment of this invention, where the number of applications run at present is larger than the predetermined number;
FIG. 4(a) is a schematic diagram showing an example of a drum-like title list displayed by the window switching apparatus according to the embodiment of this invention, where the number of application programs run at present is large;
FIG. 4(b) is a schematic diagram showing an example of the drum-like title list displayed by the window switching apparatus according to the embodiment of this invention, where the number of application programs run at present is small;
FIG. 5 is a schematic diagram for illustrating switching between methods of displaying the title list in the window switching apparatus according to the embodiment of this invention;
FIG. 6 is a schematic diagram showing an example of a window management table used in the window switching apparatus according to the embodiment of this invention;
FIG. 7 is a schematic diagram for illustrating a method of setting disablement of activation in the window switching apparatus according to the embodiment of this invention;
FIG. 8 is a flowchart for illustrating a window switching process performed by the window switching apparatus according to the embodiment of this invention;
FIG. 9 is a flowchart for illustrating a modified example of the window switching process performed by the window switching apparatus according to the embodiment of this invention;
FIG. 10 is a schematic diagram for illustrating a known window switching method; and
FIG. 11 is a schematic diagram for illustrating a disadvantage of the known window switching method.

Hereinafter, description will be made of embodiments of this invention with reference to the drawings.

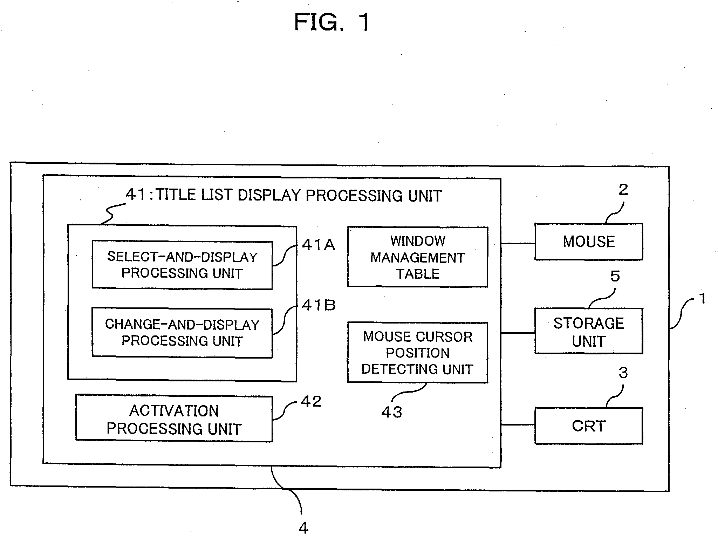

First, description will be made of a window switching apparatus, a window switching program and a computer readable record medium containing the window switching program according to an embodiment of this invention with reference to FIGS. 1 to 9.

The window switching apparatus according to this embodiment enables a user to locate a desired window (display, screen) and make it active, easily and quickly, even when a plurality of windows are displayed overlapping on a display unit (on a screen) (for example, even when a window is displayed behind another window full-screen-displayed). This window switching apparatus is useful when mounted in a computer (for example, a desk top personal computer, a notebook-sized personal computer or the like) having a multiwindow function being able to display a plurality of windows at the same time on a screen, or in a portable terminal (for example, a cellular phone or a PDA: Personal Digital Assistant), for example with operating systems such as WINDOWS (registered trademark) or Mac OS (registered trademark).

As shown in FIG. 1, this window switching apparatus 1 comprises an input unit 2 such as a keyboard or a mouse (for example, a wheel mouse), a display (a display unit, for example, a CRT: Cathode Ray Tube) 3 providing the screen, a control unit (computer) 4 configured with a CPU, a memory, etc., and a storage unit 5 such as a ROM, a hard disk and the like.

The storage unit 5 contains not only an operating system (hereinafter referred as an OS) and various application programs, but also a window switching program for allowing the computer to realize a function to be described later. These programs are loaded into a memory of the control unit 4 and executed by a CPU, whereby a desired function is realized.

Particularly, the control unit 4 executes the window switching program to realize a title list display processing function, by means of a title list display processing unit 41, of displaying a list of titles (for example, names of application programs, names of files, etc.) of windows currently set on the display 3, and an activation processing function, by means of an activation processing unit 42, of making a window of an application program corresponding to a title emphatically displayed (e.g. highlighted or enlarged) included in the title list active (for example, emphasized and displayed in the forefront) as shown in FIG. 1.

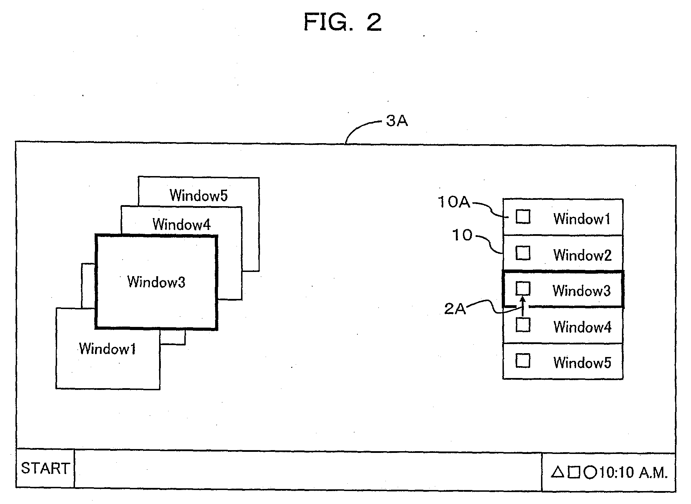

According to this embodiment, the window switching program is run when the user double-right-clicks the mouse 2 acting as the input unit, for example. When the window switching program is run, the title list display processing unit 41 displays a title list 10 of windows existing at present on a screen 3A of the display 3, as shown in FIG. 2.

The title list display processing unit 41 displays a so-called "column" (a title display column; constituted as a selection item, for example) constituting the title list 10 of application programs run at present as a region having a predetermined size, irrespective of the number of the application programs run (or windows opened) at present.

Although the size (area) of the title display column 10A is constant here, this invention is not limited to this example. When the number of application programs run at present is not more than a predetermined number, it is possible to set a larger size to the title display column 10A than those of the title display columns 10A of application programs run at present being of a number larger than the predetermined number. Alternatively, it is possible to set a different size to each title display column 10A constituting the title list 10.

Particularly, the title list display processing unit 41 determines whether or not the number of opened windows (programs being run) is more than a predetermined number. When determining that the number of application programs run at present is not more than the predetermined number, the title list display processing unit 41 displays all titles of the application programs run at present (by means of an entire display processing unit). In this case, the title list display processing unit 41 displays the title list 10 having title display columns 10A of the number corresponding to the number of application programs run at present.

When six is set as the predetermined number and the number of application programs run at present is not more than six (here, five) as shown in FIG. 2, for example, the title list display processing unit 41 displays all titles (here, Window 1 to Window 5) of application programs run at present.

Incidentally, the predetermined number may be beforehand set to an arbitrary number, but it is preferable that the predetermined number is set within a range from six to eight, for example. The title list can also be called a title row because titles are displayed in a row when the titles are entered in the title list column 10A.

The title list display processing unit 41 determines whether or not the number of application programs run at present is more than a predetermined number. When determining that the number of application programs run at present is larger than the predetermined number, the title list display processing unit 41 selects titles of the predetermined number of application programs, and displays them in the respective title display columns 10A having a predetermined size (a size large enough that the user can recognize the title) (this function being performed by a select-and-display processing unit 41A).

When the number of application programs run at present is larger than the predetermined number, the select-and-display processing unit 41A of the title list display processing unit 41 does not change the size of the title display columns 10A (which are the same size as title display columns 10A displayed when the application programs run number not more than the predetermined number) constituting the title list 10, but selects titles of the predetermined number of application programs and displays them.

In this case, the select-and-display processing unit 41A of the title list display processing unit 41 enters titles of selected application programs into the predetermined number of title display columns 10A, respectively, and displays the title list 10 having the predetermined number of title display columns 10A.

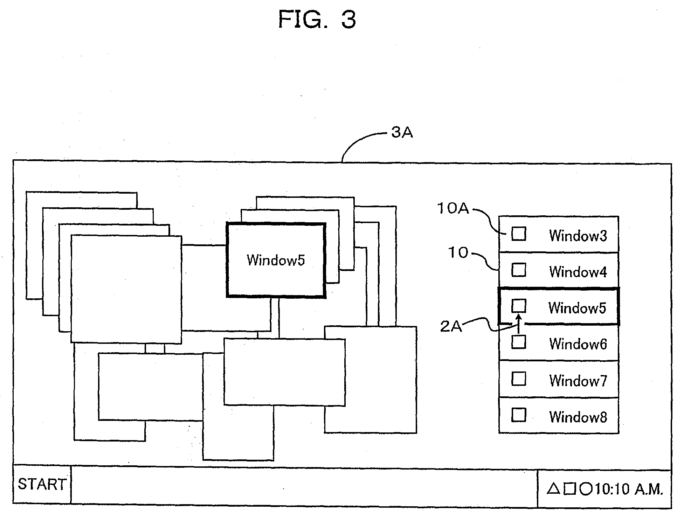

When six is set as the predetermined number and the number of application programs run at present is larger than six as shown in FIG. 3, for example, the select-and-display processing unit 41A selects titles of six application programs (here, Window 3 to Window 8) among application programs run at present, and displays them.

A reason why a predetermined number of titles are selected and displayed as above is as follows. If all the titles are displayed without changing the size of the title display columns 10A, the title list 10 will overflow from the screen. Additionally, when the user designates a desired title in the title list 10, the user operates the mouse 2 to move the mouse cursor 2A. At this time, if all the titles are displayed without changing the size of the title display columns 10A, the user has to move the mouse cursor 2A a lot, which makes it difficult to realize a quick switching of the windows.

In the case where a predetermined number of titles are selected and displayed as above, the title list display processing unit 41 may display a title of a window active at present in the middle of the title row [in the forefront in the case of 3-D (3-dimensional) display], and, above and below (or left and right) of it, (1) display titles of other windows in the order of their increasing distances from the presently active window on the screen, or (2) display titles of other windows in the order in which they can be displayed more easily (by means of the title list), or (3) display titles of other windows in the order in which their corresponding application programs were run. Note that the constitution of the title row to be first displayed as the title list is not limited to the above example, but the titles may be arbitrarily selected among application programs run at present and displayed.

According to this embodiment, a mouse cursor position detecting unit 43, which detects a position (coordinates) of a mouse cursor (a mouse pointer, a pointer) 2A moving in association with movement of the mouse 2 being as the input unit, detects a position (coordinates) of the mouse cursor 2A. On the basis of it, the title list display processing unit 41 displays the title list 10 in the neighborhood of the position of the mouse cursor 2A, as shown in FIGS. 2 and 3. The mouse cursor position detecting unit 43 is realized by the control unit 4 executing the window switching program.

Here, the title list 10 is displayed in the neighborhood of the mouse cursor 2A. However, the present invention is not limited to this example, but the title list 10 may be displayed at an arbitrary position on the display screen 3A, for example.

The title list display processing unit 41 displays a title list (refer to FIG. 2) of a vertical display type in which titles are arranged in the vertical direction on the screen 3A of the display 3, or a title list of a horizontal display type in which titles are arranged in the horizontal direction on the screen 3A of the display 3, as the title list 10.

Here, the title list display processing unit 41 displays the title list of the vertical display type or the horizontal display type. However, the present invention is not limited to this example, but the title list 10 may be displayed in another display method. It is alternatively possible to add other display methods other than the vertical display type and the horizontal display type to increase selection items, so that more methods are possible to display the title list 10.

For instance, the title list display processing unit 41 may display the title list 10 in three dimensions [3-D (3-dimension) display] to express the title list 10 more realistically.

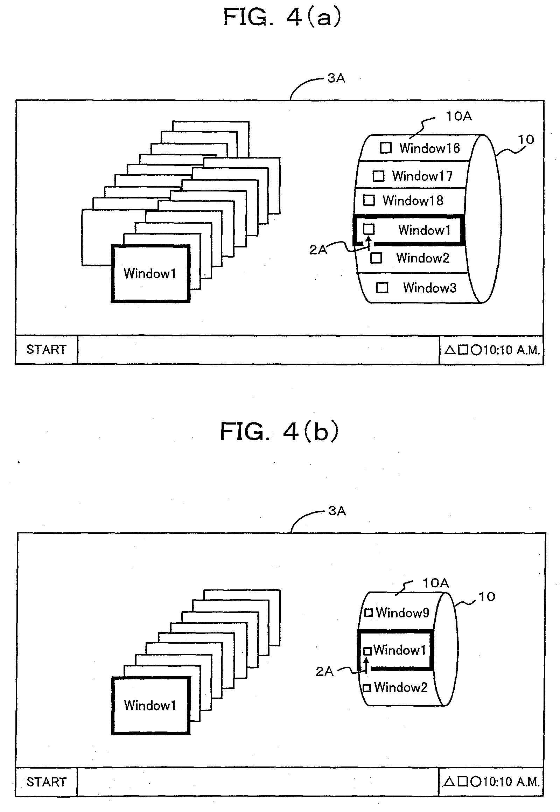

Concretely, as shown in FIGS. 4(a) and 4(b), it is preferable that the title list display processing unit 41 displays a drum-like (ring-like) title list of a size (a size of the ring, a size of the diameter) corresponding to the number of application programs run at present, as the title list 10, in three dimensions [3-D (3-dimensional) display]. Namely, it is preferable that the title list display processing unit 41 changes the size (size of the ring, size of the diameter) of the drum-like title list according to the number of application programs run at present, and displays it in three dimensions, as shown in FIGS. 4(a) and 4(b) .

When the number of application programs run at present is large, the drum-like title list is displayed large, as shown in FIG. 4(a), for example. On the other hand, when the number of application programs run at present is small, the drum-like title list is displayed small, as shown in FIG. 4(b), for example.

Whereby, the user can immediately grasp the number of windows displayed at present on the screen 3A of the display 3 on the basis of the size (size of the ring, size of the diameter) of the drum-like title list displayed in three dimensions on the screen 3A of the display 3.

According to this embodiment, the user can arbitrarily select a method of displaying the title list 10 (here, whether the title list 10 is displayed vertically or horizontally).

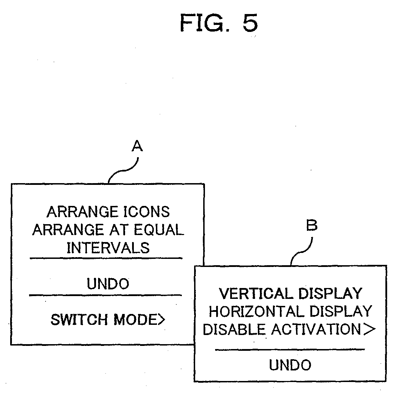

According to this embodiment, when the user right-clicks the mouse 2, a menu A having menu bars of "arrange icons," "arrange at equal intervals," "undo," and "switch mode," as shown in FIG. 5, for example, is displayed on the screen 3A of the display 3. When the user further operates the mouse 2 to point to "switch mode" with the mouse cursor 2A, a menu B having menu bars of "vertical display," "horizontal display," "disable activation," and "undo," for example, is displayed by the side of the menu A. The user operates the mouse 2 in this state to point to either "vertical display" or "horizontal display" with the mouse cursor 2A, thereby to arbitrarily select a method of displaying the title list 10.

Here, this method of displaying the title list 10 allows the user to select either "vertical display" or "horizontal display." In the case where the title list 10 can be displayed in more displaying methods as above, it is possible to provide a menu bar corresponding to another displaying method as a menu bar in the menu B, whereby the user can select any one of the displaying methods.

The method of switching the methods of displaying the title list 10 is not limited to the above example. For instance, the method of displaying the title list 10 may be set to "vertical display" as default, and the method of displaying the title list 10 may be switched to another displaying method (for example, "horizontal display," "3-D display," or the like) when the user left-clicks the mouse, with the mouse cursor 2A having been moved outside the title list 10. It is, of course, possible to set another displaying method such as "horizontal display" or "3-D display" as default. It is still alternatively possible that the property is displayed by right-clicking the mouse, with the mouse cursor 2A positioned on the title list 10, to select a method of displaying the title list 10 (for example, "vertical display," "horizontal display," "3-D display," etc.).

According to this embodiment, the mouse cursor position detecting unit 43 detects a position (coordinates) of the mouse cursor 2A, and, on the basis of it, the title list display processing unit 41 emphatically displays (for example, highlight display; bright display) a title display column 10A pointed at by the mouse cursor 2A, as shown in FIGS. 2, 3, 4(a) and 4(b) (by means of a title display column emphatically displaying unit). Emphatic display of the title display column 10A includes that a specific title display column 10A is made larger in size than the other title display columns 10A, or that a specific title display column 10A is made different in color from the other title display columns 10A, for the purpose of emphatic display of it.

That is, the title list display processing unit 41 specifies a title display column 10A pointed to by the mouse cursor 2A on the basis of a position (coordinates) of the mouse cursor 2A detected by the mouse cursor position detecting unit 43 and a position (coordinates) of each title display column 10A stored in a window management table to be described later, and emphatically displays the specified title display column 10A.

FIG. 2 shows a state in which the mouse cursor points to a title display column displaying "Window 3" as a title, so that this column is emphatically displayed. FIG. 3 shows a state in which the mouse cursor points to a title display column displaying "Window 5" as a title, so that this column is emphatically displayed. FIGS. 4(a) and 4(b) show a state in which the mouse cursor 2A points to the display column displaying "Window 1" as a title, so that this column is emphatically displayed.

Here, a title (title display column 10A) indicated by the mouse cursor 2A is emphatically displayed among titles included in the title list 10. However, this invention is not limited to this example. It is alternatively possible to emphatically display a specific title display column [for example, a title display column positioning in the middle (in the forefront when displaying it in 3-D) of the title list 10], for example.

When a title display change command is inputted through the input unit 2, the title list display processing unit 41 changes titles displayed as the title list 10 and displays them (by means of a change-and-display processing unit 41B), as shown in FIG. 1.

According to this embodiment, the change-and-display processing unit 41B scrolls through titles displayed as the title list 10 to change them.

In detail, when the user operates the wheel mouse 2 acting as the input unit to rotate the wheel, with the title list 10 displayed on the display screen 3A, the title display change command is inputted. When the title display change command is inputted, the change-and-display processing unit 41B scrolls (rotates) titles displayed as the title list 10, and changes them.

In this case, the change-and-display processing unit 41B determines a quantity and a direction of scrolling of the titles (title display column) on the basis of a rotation angle and a direction of rotation of the wheel (by means of a scrolling quantity/direction arithmetic unit), selects titles to be displayed as the title list 10 on the basis of the determined quantity and direction of scrolling, and displays them.

When a drum-like title list forming the title list 10 is displayed in 3-D [referred to FIGS. 4(a) and 4(b)] as above, the change-and-display processing unit 41B may change the scroll speed according to a size (size of the ring, size of diameter) of the drum-like title list. For instance, when the size of the drum-like title list is small, the change-and-display processing unit 41B may scroll it at a low speed. When the size of the drum-like title list is large, the change-and-display processing unit 41B may scroll it at a high speed.

When the number of application programs run at present is large (namely, when the size of the drum-like title list is large), the title list is scrolled at a higher speed than the case where the number of application programs run at present is small, so that the user can find out a desired title more quickly. As a result, the user can quickly activate a desired window.

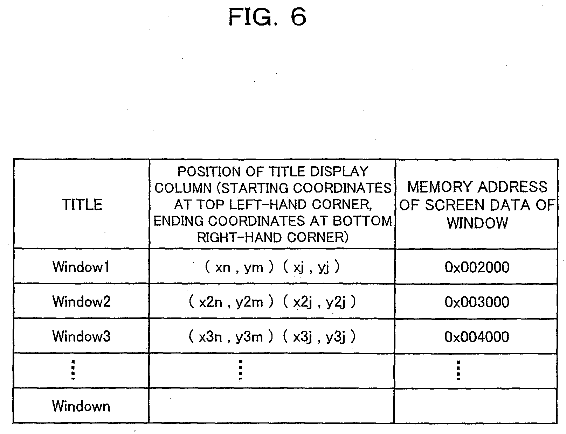

According to this embodiment, when the window switching program is run, a window management table as shown in FIG. 6 is created, in order to quickly extract titles to be newly displayed and quickly display the title list 10 when titles are scrolled and changed. The created window management table is stored in a memory constituting the control unit 4.

The window management table is created so that a title, a position of the title display column (coordinates; coordinates at the top left-hand corner and the bottom right-hand corner, here) and a memory address (pointer), at which screen data of the window is stored, are related, as shown in FIG. 6.

With the window management table as above, it is possible to access screen data of a window or data of a title display column 10A corresponding to a title pointed to by the mouse cursor 2A, and emphatically display the title display column 10A or the window quickly, only by rewriting minimum data (for example, data relating to positions of title display columns or the like) when titles are scrolled and changed.

The order of titles in the window management table coincides with the order of titles constituting the title list 10. When the number of title display columns constituting the title list 10 is predetermined, only coordinates indicating positions of the title display columns in the predetermined number are stored as positions (coordinates) of the title display columns.

The change-and-display processing unit 41B uses the window management table to select titles to be displayed as the title list 10. Namely, the change-and-display processing unit 41B rewrites a position (coordinates) of each title display column in the window management table on the basis of a quantity and a direction of scrolling of titles (title display columns), reads out titles having rewritten positions (coordinates) in the title display columns from the window management table, forms the title list 10, and displays it on the display screen 3A.

Even when the number of application programs run at present (namely, the number of windows displayed on the display screen 3A) is large, for example, several tens, the user can switch (select) the window, easily and quickly, simply by scrolling the title row, and easily search through several windows displayed at once.

Meanwhile, the window management table is also used when a title display column 10A pointed to with mouse cursor 2A is emphatically displayed as stated above, or when a window of an application program corresponding to a title emphatically displayed is made active, as will be described later.

A method of scrolling the title row is not limited to the above example.

For example, when "Page Up" key or "Page down" key provided on the keyboard 2 acting as an input unit is pressed down, with the title list 10 displayed on the display screen 3A, the title display change command may be inputted. In which case, the change-and-display processing unit 41B may scroll the title row upward at a high speed when "Page Up" key is pressed down and the title display change command is inputted. When "Page down" key is pressed down and the title display change command is inputted, the change-and-display processing unit 41B may scroll the title row downward at a high speed.

Alternatively, when "↑" key (upward arrow key) or "↓" key (downward arrow key) is pressed down, with the title list 10 displayed on the display screen 3A, the title display change command may be inputted. In which case, when "↑" key is pressed down and the title display change command is inputted, the change-and-display processing unit 41B may scroll the title row upward at a low speed. When "↓" key is pressed down and the title display change command is inputted, the change-and-display processing unit 41B may scroll the title row downward at a low speed.

Further, the title list 10 may have a scroll bar for changing the display, and the title display change command may be inputted by moving the mouse cursor 2A onto the scroll bar and clicking it. In which case, an upward/downward scroll bar may be provided to scroll the title list 10 in the upward/downward direction (the vertical direction) when the title list 10 is of a vertical display type. When the title list 10 is of a horizontal display type, a rightward/leftward scroll bar may be provided to scroll the title list 10 in the right/left direction (the horizontal direction).

According to this embodiment, the mouse cursor position detecting unit 43 detects a position (coordinates) of the mouse cursor 2A, and the activation processing unit 42 makes a window of an application program corresponding to a title displayed in a title display column 10A indicated by the mouse cursor 2A active (for example, displays it in the forefront), as shown in FIGS. 2, 3, 4 (a) and 4 (b) .

That is, when the user displays the title list 10 on the display screen 3A in order to switch the window, the activation processing unit 42 specifies a title display column 10A pointed with the mouse cursor 2A acting as the input unit on the basis of a position (coordinates) of the mouse cursor 2A detected by the mouse cursor position detecting unit 43 and a position (coordinates) of each title display column 10A stored in the window management table, accesses screen data of a window of the specific title, using a memory address (pointer) of a window corresponding to the specified title display column 10A, and makes a corresponding window active.

For example, in the case where a specific title display column [for example, a title display column positioned in the middle (in the forefront in the case of 3-D display) of the title list 10] constituting the title list 10 is emphatically displayed, the activation processing unit 42 may access screen data of a window of the specified title, using a memory address of a window corresponding to a title displayed in the specific title display column 10A, and make a corresponding window active.

FIG. 2 shows a state where a window (Window 3) of an application program corresponding to a title of "Window 3" is made active because the mouse cursor 2A points to a display column displaying "Window 3" as the title. FIG. 3 shows a state where a window (Window 5) of an application program corresponding to a title of "Window 5" is made active because the mouse cursor 2A is on a title display column displaying "Window 5". Further, FIGS. 4(a) and 4(b) show a state where a window "Window 1" of an application program corresponding to a title of "Window 1" is made active because the mouse cursor 2A lies over the display column displaying "Window 1".

According to this embodiment, when the user operates the wheel mouse 2, and rotates the wheel to scroll titles displayed as the title list 10, a title display column 10A indicated by the mouse cursor 2A or a specific title display column [for example, a title display column positioned in the middle (in the forefront in the case of 3-D display) of the title list 10] is emphatically displayed sequentially corresponding to the scrolling, and a window corresponding to the emphatically displayed title (title display column 10A) is made active in turn.

However, it is sometimes difficult to make windows corresponding to a title emphatically displayed in rapid succession when titles displayed as the title list 10 are scrolled because of performance of the CPU (particularly, a processing speed) or a capacity of the memory, for example.

In consideration of this, it is preferable that the scrolling is given priority and after a predetermined time has elapsed, a window of an application program corresponding to a title emphatically displayed among titles included in the title list 10 is made active.

There are various methods of activating a window after a predetermined time has elapsed, giving priority to scrolling. Among them, the following methods (1) and (2) are proposed here.
(1) After scrolling stops, make a window active after a predetermined time has elapsed.
(2) Switch a window to be made active at predetermined time intervals, i.e. make a window active when a predetermined time has elapsed after another window was made active the last time. In this case, the activated window is kept as it is until the predetermined time has elapsed, but the title display column 10A emphatically displayed is switched from one to another in succession. At each predetermined time interval, a window corresponding to a title display column 10A emphatically displayed at that time is activated. Namely, in scrolling, the title display column 10A emphatically displayed is switched from one to another in succession, but a window corresponding to the title display column 10A emphatically displayed is made active at each predetermined time.

That is, the activation processing unit 42 may make a window of an application program corresponding to a title emphatically displayed active when a timer set value (for example, a value corresponding to 0.5 second) set beforehand has elapsed (after an elapse of a predetermined time). In this case, since activation of a window is disabled during this predetermined time, this is called "disable activation" or "disable timer."

Since a process of making a window active is not carried out while the user scrolls the title list 10 in order to search a desired window as stated above, it is possible to execute the process without a problem even when the processing speed of the CPU is slow or the memory capacity is small, for example.

The method of activating a window in the case where the processing speed of the CPU is taken into consideration is not limited to the above, but various methods are possible.

For example, (1) when the scroll speed reaches or exceeds a predetermined speed, the window is not made active. When the scroll speed is smaller than the predetermined speed, the window is made active. (2) When the scroll speed reaches or exceeds the predetermined speed, the window is not made active. When the scroll speed is smaller than the predetermined speed, the window to be made active is switched at each predetermined time. (3) The window is made active after scrolling has stopped. (4) When the user clicks a desired display column to select it after the scrolling is stopped, a corresponding window is made active.

According to this embodiment, the user can arbitrarily set a time period (namely, a timer set value) to disable activation of a window.

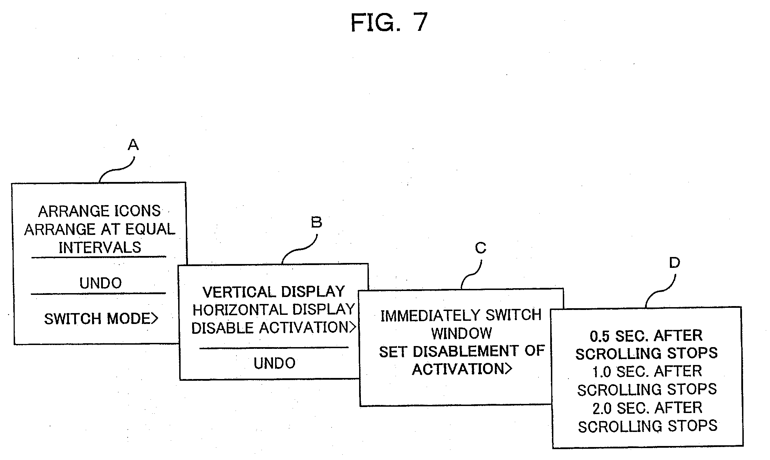

In other words, according to this embodiment, when the user right-clicks the mouse 2, for example, a menu A having menu bars of, for example, "arrange icons," "arrange at equal intervals," "undo," and "switch mode" is displayed on the screen 3A of the display 3, as shown in FIG. 7. When the user further operates the mouse 2 to select "switch mode" with the mouse cursor 2A, a menu B having menu bars of, for example, "vertical display," "horizontal display," "disable activation," and "undo" is displayed by the side of the menu A, for example. When the use still further operates the mouse 2 to select "disable activation" with the mouse cursor 2A, a menu C having menu bars of "immediately switch Window" and "set disablement of activation" is displayed by the side of the menu B, for example.

When the user operates the mouse 2 to point to "set disablement of activation" with the mouse cursor 2A, a menu D having menu bars of, for example, "0.5 second after scrolling stops," "1.0 second after scrolling stops," and "2.0 second after scrolling stops" is displayed by the side of the menu C. The user operates the mouse 2 in this state to point with the mouse cursor 2A to any of "0.5 second after scrolling stops," "1.0 second after scrolling stops," and "2.0 second after scrolling stops," thereby arbitrarily setting a time (namely, a timer set value) to disable activation of the window.

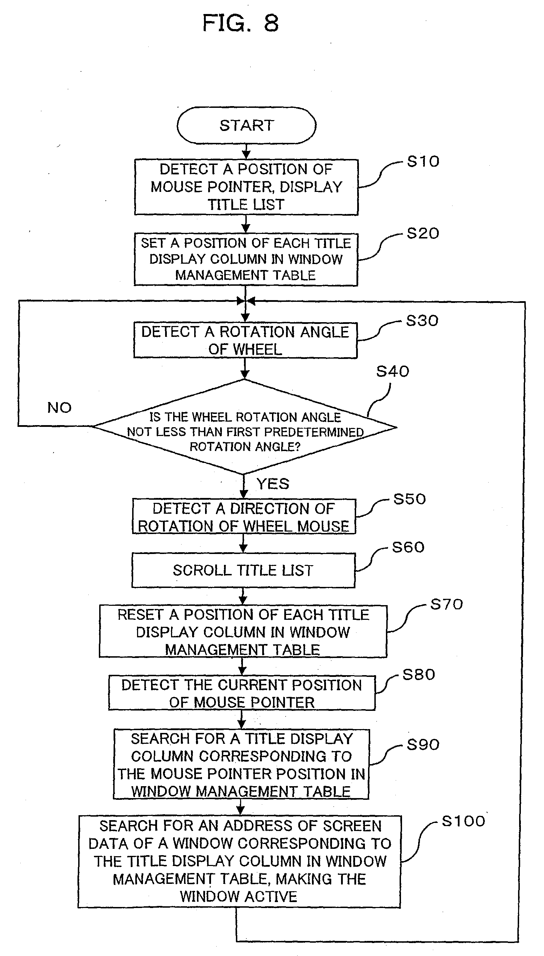

Next, description will be made of a process (a window switching process) performed when the control unit 4 of the window switching apparatus 1 executes the window switching program, with reference to a flowchart shown in FIG. 8.

It is assumed that windows of a plurality of application programs overlay one other and are displayed on the display screen 3A.

Since the window switching program is run by, for example, double-right-clicking the mouse by the user in this embodiment, the control unit 4 reads the window switching program from the storage unit 5 when detecting double-right-clicking, and executes each step of the window switching program, whereby the following processes are executed.

First, the mouse cursor position detecting unit 43 detects a position (coordinates) of the mouse cursor 2A (mouse cursor position detecting process step). On the basis of this, the title list display processing unit 41 displays the title list 10 in the neighborhood of the mouse cursor 2A on the display screen 3A (step S10; title list displaying process step), as shown in FIGS. 2, 3, 4(a) and 4(b).

According to this embodiment, the title list display processing unit 41 displays each column (a title display column; constituted as a selection item, for example) constituting the title list 10 of application programs run at present as a region of a constant size, irrespective of the number of application programs currently being run.

The size (area) of the title display column 10A is constant here, but the present invention is not limited to this example. For example, when the number of application programs run at present is not more than a predetermined number, the size of the title display column may be larger than that of the title display columns 10A corresponding to application programs run at present of the number larger than the predetermined number. Further, the size of each title display column 10A constituting the title list 10 maybe different from one other.

Particularly, the title list display processing unit 41 determines whether or not the number of application programs run at present is not more than the predetermined number. When determining that the number of application programs run at present is not more than the predetermined number, the title list display processing unit 41 displays all titles of application programs run at present (entire displaying process step). In this case, the title list display processing unit 41 displays the title list 10 having title display columns 10A of the number corresponding to the number of application programs run at present.

When the title list display processing unit 41 determines that the number of application programs run at present is larger than the predetermined number, the select-and-display processing unit 41A of the title list display processing unit 41 selects titles of the predetermined number of application programs, and displays them in respective title display columns 10A of a predetermined size (a size sufficient that the user can recognize the title) (selecting-and-displaying process step). In this case, the select-and-display processing unit 41A inserts titles of selected application programs into the predetermined number of title display columns 10A, and displays the title list 10 having the predetermined number of title display columns 10A.

Next, the title list display processing unit 41 sets a position (coordinates) of each of the title display columns 10A constituting the title list 10 displayed on the display screen 3A in the window management table shown in FIG. 6 (step S20; title list displaying process step).

Afterward, when the user rotates the wheel of the wheel mouse (input unit) 2, for example, in order to scroll the titles (title row) displayed as the title list 10 (namely, when the title display change command is inputted), the change-and-display processing unit 41B detects a rotation angle of the wheel of the wheel mouse 2 (step S30; wheel rotation angle detecting process step, changing-and-displaying process step, title list displaying process step), and determines whether or not the rotation angle of the wheel is less than a first predetermined rotation angle (step S40; wheel rotation angle determining process step, changing-and-displaying process step, title list displaying process step).

When the display change processing unit 41B determines, as a result, that the rotation angle of the wheel of the wheel mouse 2 is not less than the first predetermined rotation angle (namely, when a scroll start condition is satisfied), for example, the change-and-display processing unit 41B detects a direction of rotation of the wheel of the wheel mouse 2 (step S50; wheel rotation direction detecting process step, changing-and-displaying process step, title list displaying process step). The change-and-display processing unit 41B then scrolls titles (title display columns) displayed as the title list 10 on the basis of the rotation angle and the direction of rotation of the wheel to change the titles to be displayed as the title list 10 (step S60; scrolling process step, changing-and-displaying process step, title list displaying process step).

Next, the title list display processing unit 41 re-sets a position (coordinates) of each title display column 10A constituting the title list 10 displayed on the displayed screen 3A in the window management table shown in FIG. 6 (step S70; title list displaying process step).

Next, the mouse cursor position detecting unit 43 detects the current position (coordinates) of the mouse cursor 2A (step S80; mouse cursor position detecting process, changing-and-displaying process step, title list displaying process step). The change-and-display processing unit 41B searches for a title display column 10A on the basis of a position (coordinates) of the mouse cursor 2A, using the window management table, and emphatically displays (for example, highlights) a title display column 10A pointed with the mouse cursor 2A (step S90; emphatically displaying process step, changing-and-displaying process step, title list displaying process step).

Although a title pointed to by the mouse cursor 2A is emphatically displayed here, the present invention is not limited to this example. A specific title display column [for example, a title display column positioned in the middle (in the forefront in the case of 3-D display) of the title list 10] may be emphatically displayed. In which case, the step of detecting a position of the mouse cursor 2A is unnecessary.

The activation processing unit 42 searches for a memory address (pointer) at which screen data of a window of an application program corresponding to the title display column 10A pointed with the mouse cursor 2A is stored, using the window management table. The activation processing unit 42 accesses to the screen data of the window stored in the storage unit 5 with a searched memory address, and makes a corresponding window active (step S100; activating process step).

In the case where a specific title display column [for example, a title display column positioning in the middle (in the forefront in the case of 3-D display) of the title list 10] constituting the title list 10 is emphatically displayed, the activation processing unit 42 may search for a memory address (pointer) at which screen data of a window of an application program corresponding to a title display column 10A emphatically displayed is stored, access to the screen data of the window stored in the storage unit 5 with a searched memory address, and make a corresponding window active.

Afterward, the processes at steps S30 to S100 are repeated. While titles (title row) displayed as the title list 10 are scrolled, a title display column 10A to be emphatically displayed or a window to be made active is switched in succession.

After that, when the change-and-display processing unit 41B determines at step S40 that the rotation angle of the wheel of the wheel mouse 2 is smaller than the first predetermined rotation angle (namely, when the scroll stop condition is satisfied), the change-and-display processing unit 41B stops the scrolling.

Thereafter, the processes at steps S30 and S40 are repeated. While the scroll stop condition is satisfied until it is again determined that the rotation angle of the wheel of the wheel mouse 2 is not less than the first predetermined rotation angle, for example, a title display column 10A pointed with the mouse cursor 2A is emphatically displayed, and a corresponding window is kept in an active state (wait state). When it is determined at step S40 that the rotation angle of the wheel of the wheel mouse 2 is not less than the first predetermined rotation angle, for example, the processes at the above steps S30 to S100 are repeated.

When the user selects a desired title in the title list 10 displayed on the display screen 3A by clicking the desired title pointed, with the mouse cursor 2A pointing the desired title (namely, when the title select command is inputted), the mouse cursor position detecting unit 43 detects the current position (coordinates) of the mouse cursor 2A (mouse cursor position detecting process, title list displaying process step). The title list display processing unit 41 searches for a title display column 10A, using the window management table, on the basis of the position (coordinates) of the mouse cursor 2A, and emphatically displays (for example, highlights) a title display column 10A indicated by the mouse cursor 2A (emphatically displaying process step, title list displaying process step).

The activation processing unit 42 searches for a memory address (pointer) at which screen data of a window of an application program corresponding to the title display column 10A pointed to by the mouse cursor 2A is stored, using the window management table. With a searched memory address, the activation processing unit 42 accesses to screen data of a window stored in the storage unit 5 to make a corresponding window active. The activation processing unit 42 then closes the title list 10 displayed at present, and terminates the process (activating process step).

When a desired title is included in the title list 10 displayed first, the user operates, for example, the wheel mouse 2 to move the position of the mouse cursor 2A to the desired title with the mouse cursor 2A, without scrolling titles (title row) displayed as the title list 10. The user clicks, with the mouse cursor 2A at the desired title, to select the desired title in the title list 10 displayed on the display screen 3A (namely, input a title select command).

When the desired title is selected as above, the mouse cursor position detecting unit 43 detects the current position (coordinates) of the mouse cursor 2A (mouse cursor position detecting process, title list displaying process step). The title list display processing unit 41 then searches for a title display column 10A on the basis of the position (coordinates) of the mouse cursor 2A, using the window management table, and emphatically displays (for example, highlights) a title display column pointed to by the mouse cursor 2A (emphatically displaying process step, title list displaying process step).

The activation processing unit 42 searches for a memory address (pointer) at which screen data of a window of an application program corresponding to the title display column 10A pointed with the mouse cursor 2A is stored, using the window management table. With the found memory address, the activation processing unit 42 accesses screen data of a window stored in the storage unit 5 to make a corresponding window active. The activation processing unit 42 then closes the title list 10 displayed at present, and terminates the process (activating process step).

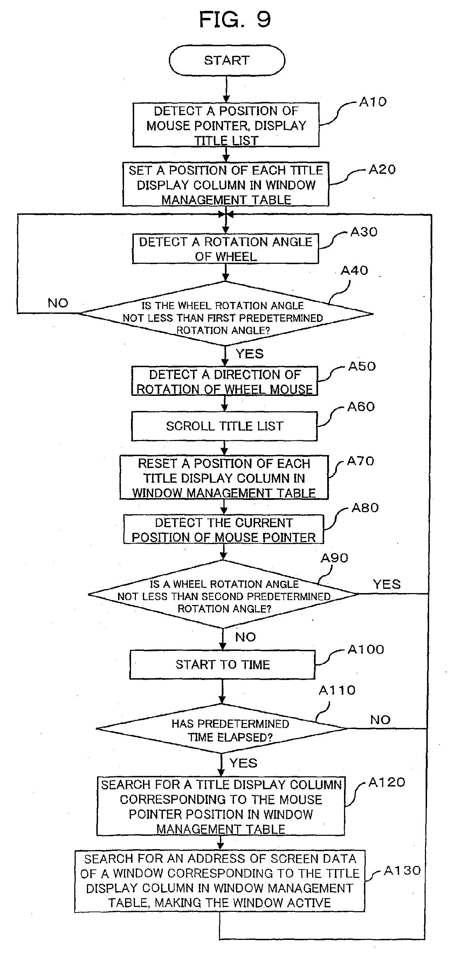

When disablement of activation of a window is set in consideration of the processing speed or the like of the CPU, for example, the window switching program to be performed by the control unit 4 of the above window switching apparatus 1 is executed in a way (window switching process) as shown in a flowchart in FIG. 9.

As shown in FIG. 9, after processes at steps A10 to A70 similar to those at the above steps S10 to S70, the mouse cursor position detecting unit 43 detects the current position (coordinates) of the mouse cursor 2A (mouse cursor position detecting process, changing-and-displaying process step, title list displaying process step), at step A80. The change-and-display processing unit 41B then searches for a title display column 10A on the basis of the position (coordinates) of the mouse cursor 2A, using the window management table, and emphatically displays (for example, highlights) a title display column 10A pointed to by the mouse cursor 2A (emphatically displaying process step, changing-and displaying process step, title list displaying process step).

Here, a title indicated by the mouse cursor 2A is emphatically displayed. However, this invention is not limited to this example, but a specific title display column [for example, a title display column positioning in the middle (in the forefront in the case of 3-D display) of the title list 10] constituting the title list 10 may be emphatically displayed. In which case, the process (step) of detecting a position of the mouse cursor 2A is unnecessary.

At step A90, the change-and-display processing unit 41B determines whether or not the rotation angle of the wheel of the wheel mouse 2, for example, is less than a second predetermined rotation angle. Incidentally, the second predetermined rotation angle is set larger than the first predetermined rotation angle.

When the change-and-display processing unit 41B determines, as a result, that the rotation angle of the wheel is not less than the second predetermined rotation angle, the procedure returns to step A30. Thereafter, the processes at steps A30 to A90 are repeated until it is determined that the rotation angle of the wheel of the wheel mouse 2 is smaller than the second predetermined rotation angle. Whereby, a title display column 10A to be emphatically displayed is switched in succession while titles (title row) displayed as the title list 10 are scrolled.

Here, it is determined whether or not the rotation angle of the wheel is not less than the second predetermined rotation angle (namely, whether the scroll speed is not less than a predetermined speed).

Whereby, when the wheel rotation angle is not less than the second predetermined rotation angle (namely, when the scroll speed is not less than the predetermined speed; when the scroll speed is high), the titles are rotated, with the window not being made active. When the wheel rotation angle is smaller than the second predetermined angle (namely, when the scroll speed is smaller than the predetermined speed; when the scroll speed is low), a title display column 10A to be emphatically displayed and a window to be made active are switched in succession while titles (title row) displayed as the title list 10 are scrolled.

Afterward, when the change-and-display processing unit 41B determines at step A90 that the rotation angle of the wheel of the wheel mouse 2, for example, is smaller than the second predetermined rotation angle, the procedure proceeds to step A100, at which the activation processing unit 42 starts to time with a timer.

Next, it is determined whether or not a predetermined timer set value (a predetermined time; for example, 0.5 second) has elapsed since the timer started to time (step A110; predetermined time elapse determining process step, activating process step). When it is determined that the predetermined time has elapsed, the procedure proceeds to steps A120 to A130.

At step A120, the activation processing unit 42 searches for a title display column 10A on the basis of a position (coordinates) of the mouse cursor 2A, using the window management table. At step A130, the activation processing unit 42 searches for a memory address (pointer) at which screen data of a window of an application program corresponding to the title display column 10A pointed with the mouse cursor 2A is stored. The activation processing unit 42 then accesses screen data of a window stored in the storage unit 5 with the found memory address to make a corresponding window active (activating process step). Incidentally, the timer is reset.

In the case where a specific title display column [for example, a title display column positioned in the middle (in the forefront in the case of 3-D display) of the title list 10] constituting the title list 10 is emphatically displayed, the activation processing unit 42 may search for a memory address (pointer) at which screen data of a window of an application program corresponding to a title display column 10A emphatically displayed is stored, and access to screen data of a window stored in the storage unit 5 with the found memory address to make a corresponding window active.

Afterward, the processes at steps A30 to A130 are repeated, and a title display column 10A to be emphatically displayed is switched in succession while titles (title row) displayed as the title list 10 are scrolled, and a window to be made active is switched at regular intervals. In this case, there is a time lag between a switching the title display column 10A to be emphatically displayed and a switching of the window to be made active.

Until it is determined at step A110 that the predetermined time has elapsed, the processes at the above steps A30 to A110 are repeated. Namely, while the scroll speed is smaller than the predetermined speed and this state is kept (namely, when the wheel rotation angle is not less than the first rotation angle and a state where the wheel rotation angle is smaller than the second predetermined rotation angle is kept), the processes at steps A30 to A110 are repeated. In this case, a title display column 10A to be emphatically displayed is switched in succession while titles (title row) displayed as the title list 10 are scrolled.

When the scroll speed again becomes not less than the predetermined speed during the above process (namely, when the wheel rotation angle becomes not less than the second predetermined rotation angle), the processes at steps A30 to A90 are repeated. When the scroll speed again becomes smaller than the predetermined speed, the processes at steps A30 to A110 are repeated.

After that, when the change-and-display processing unit 41B determines at step A40 that the wheel rotation angle is smaller than the first predetermined rotation angle (namely, when the scroll stop condition is satisfied), the change-and-display processing unit 41B stops the scrolling. Thereafter, the processes at steps A30 and A40 are repeated. Before it is again determined that the wheel rotation angle is not less than the first predetermined rotation angle, a title display column 10A indicated by the mouse cursor 2A is emphatically displayed when the scroll stop condition is satisfied, and a window corresponding to it is kept in the active state (wait state).

When the user selects a desired title in the title list 10 displayed on the display screen 3A by clicking the desired title, with the mouse cursor 2A on it (namely, when the title select command is inputted), the mouse cursor position detecting unit 43 detects the current position (coordinates) of the mouse cursor 2A (mouse cursor position detecting process, title list displaying process step), the title list display processing unit 41 searches for a title display column 10A on the basis of the position (coordinates) of the mouse cursor 2A, using the window management table, and emphatically displays (for example, highlights) a title display column 10A pointed to by the mouse cursor 2A (emphatically displaying process step, title list displaying process step).

The activation processing unit 42 searches for a memory address (pointer) at which screen data of a window of an application program corresponding to a title display column 10A pointed with the mouse cursor 2A is stored, using the window management table. With the found memory address, the activation processing unit 42 accesses screen data of a window stored in the storage unit 5 to make a corresponding window active, closes the title list 10 displayed at present, and terminates the process (activating process step).

Here, a window to be made active is switched each predetermined time when the wheel rotation angle is smaller than the second predetermined rotation angle (namely, when the scroll speed is smaller than the predetermined speed). However, this invention is not limited to this example.
(1) For example, when the wheel rotation angle is smaller than the second predetermined rotation angle (namely, when the scroll speed is smaller than the predetermined speed), a window to be made active may be switched in succession (for example, steps A100 and A110 may be omitted). In which case, the processes at steps A30 to A90 are repeated when the scroll speed is not less than the predetermined speed. When the scroll speed is smaller than the predetermined speed, the processes at steps A30 through A90, A120 and A130 are repeated.
(2) For example, irrespective of the scroll speed (for example, step A90 is omitted), a window corresponding to a title display column 10A emphatically displayed at that time may be made active each predetermined time. In which case, the processes at steps A30 through A80, A100 and A110 are repeated until the predetermined time has elapsed, and the processes at steps A30 through A80, and A100 through A130 are carried out after the predetermined time has elapsed.
(3) For example, a window may be made not active during scrolling; after the scrolling is stopped, a window corresponding to a title display column 10A emphatically displayed at that time may be made active.
   In which case, the processes at steps A30 through A80 are repeated during the scrolling, and the following processes (corresponding to steps A120 and A130) are carried out when it is determined at step A40 that the wheel rotation angle is smaller than the first predetermined rotation angle.
   Namely, the activation processing unit 42 searches for a title display column 10A on the basis of a position (coordinates) of the mouse cursor 2A, using the window management table, and searches for a memory address (pointer) at which screen data of a window of an application program corresponding to the title display column pointed with the mouse cursor 2A is stored. With the found memory address, the activation processing unit 42 accesses screen data of a window stored in the storage unit 5 to make a corresponding window active (activating process step).
(4) For example, when a predetermined time has elapsed after the scrolling was stopped, a window corresponding to a title display column 10A emphatically displayed may be made active.
   In which case, the processes at step A30 through A80 are repeated during the scrolling, and the following processes (corresponding to steps A100 through A130) are carried out when it is determined at step A40 that the wheel rotation angle is smaller than the first predetermined rotation angle.
   Namely, the activation processing unit 42 starts to time with the timer. Next, the activation processing unit 42 determines whether or not a timer set value (a predetermined time; for example, 0.5 second) set beforehand has elapsed since the timer started to time (predetermined time elapse determining process step, activating process step). After that, when the activation processing unit 42 determines that the predetermined time has elapsed, the activation processing unit 42 searches for a title display column 10A on the basis of a position (coordinates) of the mouse cursor 2A, using the window management table, and searches for a memory address (pointer) at which screen data of a window of an application program corresponding to the title display column pointed with the cursor 2 is stored. With the found memory address, the activation processing unit 42 accesses screen data of a window stored in the storage unit 5, and makes a corresponding window active (activating process step).
(5) For example, when a predetermined time has elapsed after the scrolling was stopped, a predetermined number (for example, three) of windows corresponding to a predetermined number (for example, three) of title display columns 10A, which have been emphatically displayed immediately before the stop of the scrolling, may be made active one after other.

According to this embodiment, even when a number of application programs are run and a plurality (for example, ten or more) of windows are displayed together on the screen (for example, even when many windows are hidden behind a window which is full-screen), the window switching apparatus 1 secures a predetermined size of a title display column 10A in the title list 10, limits the number of titles to be displayed as the title list 10, and changes titles to be displayed as the title list 10A by scrolling them, for example. Accordingly, a title can be displayed large enough that the user can recognize it. The user thereby can find a desired title (application program) and make it active, easily and quickly.

The title list 10 can be displayed anywhere on the display screen 3A. Particularly, the title list 10 is displayed in the neighborhood of the mouse cursor 2A in the above embodiment, so that the user can select a desired window without moving the mouse cursor 2A (or with a minimum quantity of movement of the mouse cursor). As compared with a case where the user moves the mouse cursor 2A to a region where the taskbar is displayed, for example, it is possible to realize quick switching of the window.

Particularly, even if a number of windows are displayed on a small-sized screen like a cellular phone, it is possible to display the title list 10 so that the user can visually recognize it, certainly.

The above embodiment has been described by way of the window switching apparatus 1. However, a program for realizing the above window switching apparatus (the window switching program) can be stored in a computer readable record medium, distributed in a state in which the program is stored in the record medium, circulated in market, and traded.

The window switching program stored in a record medium can be installed in a computer (for example, a personal computer or a portable terminal), and executed by the computer (for example, a computer or a portable terminal), whereby the window switching apparatus described in the above embodiment can be realized. Accordingly, the window switching program can provide the same effects as the window switching apparatus described above.

Here, the record medium includes a memory such as a semiconductor memory, a magnetic disc, an optical disc (for example, CD-ROM or the like), a magneto-optic disc (MO), a magnetic tape, a hard disk, a flexible disk, an IC card, a ROM cartridge, a punched card, a storage (a memory such as RAM, ROM or the like) inside a computer, an external storage or the like, which can store the program. Additionally, various media, which can be read by a computer, such as a printed matter on which codes such as bar codes are printed can be used. Incidentally, CD-ROM, MO, magnetic tape, IC card and the like are also called transportable record media.

The window switching program is stored in a computer readable record medium, here, but the window switching program is not necessarily stored in a record medium. The window switching program may be transmitted (transmitted and received) over a network being as a transmission medium, for example, not stored in a record medium as above. Whereby, the window switching program can be distributed, circulated in market, and traded. For instance, the window switching program may be up-loaded to a web server or the like, or down-loaded from a web server or the like over a network such as the Internet.

In the above embodiment, the title list 10 is displayed on the display screen 3A, separately from taskbar buttons, whereby the user can switch the window, easily and quickly. However, this invention is not limited to this example.

For example, this invention can be applied even if the title list is displayed as taskbar buttons (tabs) on the taskbar as done in conventional WINDOWS. In such case, the size of the taskbar button is not changed, but only a predetermined number of taskbar buttons are selected and displayed on the taskbar when the number of the taskbar buttons to be displayed on the taskbar is larger than a predetermined number (for example, four), and taskbar buttons (titles) displayed as the title list are changed and displayed on the basis of the title display change command. In this case, when the user clicks a desired taskbar button, a corresponding window is made active.

Note that the present invention is not limited to the above examples, but may be modified in various ways within the scope of the appended claims.

The present invention enables application programs to be activated, closed and manipulated easily and quickly, thus decreasing processing time and enabling a more efficient use of computer (hardware and software) resources.

Although the above description has referred to a number of application programs run at present, the number of windows currently set on a screen does not need to correspond one-to-one with the number of application programs being run. Two or more windows may be associated with the same application program, and other windows may be associated with an operating system or another function.

## Claims

1. A window switching apparatus comprising:
an input unit (2);
a display unit (3);
a title list display processing unit (41) for displaying titles of windows currently set on said display unit, as a title list on said display unit (3);
an activation processing unit (42) for making a window corresponding to a title emphatically displayed among said titles included in said title list active;
said title list display processing unit (41) comprising:
a select-and-display processing unit (41A) for selecting titles of a predetermined number of windows and displaying said selected titles in title display areas of a predetermined size constituting said title list when the number of windows is larger than the predetermined number; and
a change-and-display processing unit (41B) for changing the titles displayed as said title list and displaying said titles when a title display change command is inputted through said input unit (2).

2. The window switching apparatus according to claim 1, wherein said change-and-display processing unit (41B) scrolls through titles displayed as said title list to change said titles displayed.

3. The window switching apparatus according to claim 1 or 2, wherein said activation processing unit (42) makes a window corresponding to a title emphatically displayed among titles included in said title list active after a predetermined time has elapsed.

4. The window switching apparatus according to any one of claims 1 to 3, wherein said input unit (2) comprises a mouse or trackball; and
said title list display processing unit (41) displays said title list in the neighborhood of a cursor moving in association with movement of said mouse or trackball.

5. The window switching apparatus according to any one of claims 1 to 4, wherein said title list display processing unit (41) displays a drum-like title list having a size according to said number of windows as said title list on said display unit (3).

6. A window switching program which, when executed by a computer, causes the computer to execute the following processes:
a title list displaying process of displaying titles of windows currently set on a display unit of said computer, as a title list on said display unit;
an activating process of making a window corresponding to a title emphatically displayed among titles included in said title list active;
said title list displaying process comprising:
a selecting-and-displaying process step of selecting titles of a predetermined number of windows and displaying said selected titles in title display areas of a predetermined size constituting said title list when the number of windows is larger than the predetermined number; and
a changing-and-displaying process step of changing the titles displayed as said title list and displaying said titles when a title display change command is inputted through an input unit.

7. The window switching program according to claim 6, wherein, at said changing-and-displaying process step, said window switching program causes said computer to execute a process of scrolling through titles displayed as said title list to change said titles displayed.

8. The window switching program according to claim 6 or 7, wherein, in said activating process, said window switching program causes said computer to execute a process of making a window corresponding to a title emphatically displayed among titles included in said title list active after a predetermined time has elapsed.

9. The window switching program according to any one of claims 6 to 8, wherein said input unit comprises a mouse or trackball; and
in said title list displaying process, said window switching program causes said computer to execute a process of displaying said title list in the neighborhood of a cursor moving in association with movement of said mouse or trackball.

10. The window switching program according to any one of claims 6 to 9, wherein, in said title list displaying process, said window switching program causes said computer to execute a process of displaying a drum-like title list having a size according to the current number of windows as said title list on a display unit.

11. A computer readable record medium containing a window switching program which, when executed by a computer, causes the computer to execute a process comprising a title list displaying process of displaying titles of windows currently set on a display unit of the computer as a title list on said display unit, and an activating process of making a window corresponding to a title emphatically displayed among titles included in said title list active;
said title list displaying process comprising:
a selecting-and-displaying process step of selecting titles of a predetermined number of windows and displaying said selected titles in title display areas of a predetermined size constituting said title list when the number of windows is larger than the predetermined number; and
a changing-and-displaying process step of changing the titles displayed as said title list and displaying said titles when a title display change command is inputted through an input unit.

12. The computer readable record medium containing a window switching program according to claim 11, wherein, at said changing-and-displaying process step, said window switching program causes said computer to execute a process of scrolling through titles displayed as said title list to change said titles.

13. The computer readable record medium containing a window switching program according to claim 11 or 12, wherein, in said activating process, said window switching program causes said computer to execute an activating process of making a window corresponding to a title emphatically displayed among titles included in said title list active after a predetermined time has elapsed.

14. The computer readable record medium containing a window switching program according to any one of claims 11 to 13, wherein said input unit comprises a mouse or trackball; and
in said title list displaying process, said window switching program causes said computer to execute a process of displaying said title list in the neighborhood of a cursor moving in association with movement of said mouse or trackball.

15. The computer readable record medium containing a window switching program according to any one of claims 11 to 14, wherein, in said title list displaying process, said window switching program causes said computer to execute a process of displaying a drum-like title list having a size according to said number of windows as said title list on a display unit.
